# EUROPEAN PATENT APPLICATION

(11) **EP 1 557 892 A1**
(43) Date of publication of application: **27.07.2005**
(21) Application number: 03770033.3
(22) Date of filing: 30.10.2003
(51) Int. Cl.: H01M 4/02, H01M 4/04, H01M 10/40

(54) **SOLID ELECTROLYTE COMPOSITION, CATHODE FILM FOR BATTERY, AND METHOD FOR MANUFACTURING SAME**

(30) Priority: 31.10.2002 JP 2002317613
(71) Applicant: Zeon Corporation, Tokyo 100-8323 (JP)
(72) Inventor: FUKUMINE, Yoshio, ZEON CORPORATION, Chiyoda-ku, Tokyo 100-8323 (JP); ONISHI, Hidenori, ZEON CORPORATION, Chiyoda-ku, Tokyo 100-8323 (JP)
(74) Representative: Albrecht, Thomas, Dr.
(86) International application number: PCT/JP2003/013939
(87) International publication number: WO 2004/040674

(57) **Abstract**

There are provided a cathode film for batteries which is easy to handle in the form of a film and has excellent mechanical strength and an excellent ion conductivity ; a solid electrolyte composition suitable for producing such a cathode film; and a process for efficiently producing such a cathode film. The solid electrolyte composition for cathode which is composed of a polyether polymer, an active material of positive electrode, conductive particles, an electrolyte salt compound and a photopolymerization initiator wherein the photopolymerization initiator is present in an amount of 2 to 30 parts by weight per 100 parts by weight of the polyether polymer, is molded and then crosslinked by irradiation of an ultraviolet light, whereby a cathode film for batteries is obtained. By using this cathode film, a battery with excellent cycle performance can be obtained.

## Description

### TECHNICAL FIELD

The present invention relates to a solid electrolyte composition used as a cathode material for batteries, a cathode film for batteries produced from the composition, and a process for producing the cathode film.

### BACKGROUND ART

Conventional electrolytes for batteries are in the form of a liquid or gel in view of an ion conductivity thereof, and tend to have problems such as damage to surrounding equipments due to leakage of liquid therefrom and, therefore, need of high-strength enclosures, resulting in limited reduction in weight of batteries.

On the other hand, solid electrolytes made of polymers have been studied. The polymeric solid electrolytes are excellent in processability and flexibility and, therefore, exhibit a large freedom of a shape when applied to batteries as well as a high safety owing to no inclusion of an electrolytic solution.

For example, Japanese Patent Application Laid-Open No. Heisei 2(1990)-24975 has already proposed the use of ion-conductive solid electrolytes produced by blending an alkali metal salt in an ethyleneoxide-propyleneoxide copolymer.

The polymeric solid electrolytes have been initially used as an alternative material of an electrolytic solution for batteries, i.e., an ion-conductive material disposed between a cathode and an anode thereof. In recent years, the application thereof to a cathode material is also proposed.

For example, in Japanese Patent Application Laid-Open No. 2001-319692, there has been proposed the lithium ion battery in the form of a laminate which comprises (a) a cathode sheet obtained by dispersing an active material of positive electrode and conductive fine particles in an electrolyte prepared by dissolving a lithium salt in polyethyleneoxide having a number-average molecular weight of 400 to 20000, (b) a polymeric solid electrolyte film obtained by molding an ethyleneoxide-glycidyl ether copolymer having a weight-average molecular weight of 100000 to 2000000 in which a lithium salt is dissolved, into a film shape, and (c) a lithium-containing anode sheet.

However, according to the present inventors' studies, the above conventional batteries have such a problem that the cathode sheet (a) tends to suffer from damage or breakage owing to its insufficient strength upon the lamination process, etc. Further, if the copolymer in the cathode sheet is crosslinked with peroxides , etc., to enhance a mechanical strength of the cathode sheet, an undesired early crosslinking (scorch) tends to be caused upon the sheet molding stage. As a result, there tends to occur such a problem that the active material of positive electrode and the conductive fine particles fail to be fully dispersed in the cathode sheet, resulting in deterioration of electric properties such as ion conductivity of the resultant batteries.

### DISCLOSURE OF THE INVENTION

An object of the present invention is to provide a cathode film for batteries which has an excellent mechanical strength, is facilitated in handling in a film state, and exhibits an excellent ion conductivity; a solid electrolyte composition suitable for production of the cathode film; and a process for efficiently producing the cathode film for batteries.

As a result of extensive researches in view of the above object, the inventors have found that when an active material of positive electrode and conductive fine particles together with a specific amount of a photopolymerization initiator are blended with a polyether polymer containing an electrolyte salt compound, and the blended mixture is molded into a film shape and crosslinked by irradiating an ultraviolet light, the obtained cathode film for batteries can exhibit an excellent mechanical strength and an excellent ion conductivity. The present invention has been accomplished on the basis of the above finding.

Thus, the present invention provides the following aspects (1) to (7):
1. A solid electrolyte composition for cathode comprising a polyether polymer, an active material of positive electrode, conductive fine particles, an electrolyte salt compound and a photopolymerization initiator, said photopolymerization initiator being contained in an amount of 2 to 30 parts by weight on the basis of 100 parts by weight of the polyether polymer.
2. The solid electrolyte composition for cathode according to the above aspect (1), wherein said photopolymerization initiator is contained in an amount of 3 to 15 parts by weight on the basis of 100 parts by weight of the polyether polymer.
3. The solid electrolyte composition for cathode according to the above aspect (1), wherein said polyether polymer is a copolymer of a photo-crosslinkable oxirane monomer.
4. The solid electrolyte composition for cathode according to the above aspect (1), wherein said polyether polymer has a weight-average molecular weight of 100000 to 1500000.
5. A cathode film for batteries produced by subjecting the solid electrolyte composition as described in the above aspect (1) to molding and then a crosslinking reaction by irradiation of an ultraviolet light.
6. A process for producing a cathode film for batteries, comprising the steps of:
   blending a polyether polymer containing an electrolyte salt compound, an active material of positive electrode, conductive fine particles and a photopolymerization initiator with each other, said photopolymerization initiator being present in an amount of 2 to 30 parts by weight on the basis of 100 parts by weight of the polyether polymer;
   molding the resultant blended mixture into a film; and
   subjecting the film to a crosslinking reaction by irradiating an ultraviolet light.
7. The process according to the above aspect (6), wherein a cumulative dose of the ultraviolet light irradiated is in the range of 10000 to 100000 mJ/cm².

Thus, when the solid electrolyte composition for cathode according to the present invention is molded into a film, and the obtained film is subjected to a crosslinking reaction by irradiating an ultraviolet light, it is possible to obtain a cathode film for batteries which can exhibit an excellent ion mechanical strength and an excellent ion conductivity and is facilitated in handling in a film state. The cathode film for batteries can be used to produce a battery having an excellent cycle performance.

### BEST MODE FOR CARRYING OUT THE INVENTION

The solid electrolyte composition for cathode according to the present invention comprises a polyether polymer, an active material of positive electrode, conductive fine particles, an electrolyte salt compound and a photopolymerization initiator, wherein the photopolymerization initiator is contained in an amount of 2 to 30 parts by weight on the basis of 100 parts by weight of the polyether polymer.

The polyether polymer used in the present invention is not particularly limited as long as the polymer contains as main structural units, oxyalkylene repeating units obtained by ring-opening polymerization of an oxirane monomer. Although the oxirane monomer is also not particularly limited, the polyether polymer used in the present invention is preferably those containing as main structural units, monomer units (A) derived from ethyleneoxide as the oxirane monomer (a). The polyether polymer more preferably contains the ethyleneoxide monomer units (A) and monomer units (B) derived from an oxirane monomer (b) copolymerizable with ethyleneoxide in amounts of 70 to 99 mol% and 30 to 1 mol%, respectively, on the basis of whole repeating units in the polymer.

The content of the ethyleneoxide monomer units (A) in the polyether polymer is more preferably in the range of 80 to 98 mol% and still more preferably 89 to 97 mol%. If the content of the ethyleneoxide monomer units (A) is too small, the cathode film for batteries obtained by molding the solid electrolyte composition of the present invention tends to be insufficient in mechanical strength. On the contrary, if the content of the ethyleneoxide monomer units (A) is too large, the resultant cathode film for batteries tends to be deteriorated in ion conductivity, resulting in deteriorated characteristics of the obtained batteries.

The content of the monomer units (B) in the polyether polymer is more preferably 2 to 20 mol% and still more preferably 7 to 10 mol%.

Examples of the oxirane monomer (b) copolymerizable with ethyleneoxide include alkyleneoxides having 3 to 20 carbon atoms, glycidyl ethers having 1 to 10 carbon atoms, oxides of vinyl aromatic compounds, and crosslinkable oxirane monomers obtained by introducing a crosslinkable group into these oxirane monomers.

Specific examples of the alkyleneoxides having 3 to 20 carbon atoms include chain-like alkyleneoxides such as propyleneoxide, 1,2-epoxybutane, 1,2-epoxyisobutane, 2,3-epoxybutane, 1,2-epoxyhexane, 1,2-epoxyoctane, 1,2-epoxydecane, 1,2-epoxytetradecane, 1,2-epoxyhexadecane, 1,2-epoxyoctadecane and 1,2-epoxyeicosane; and cycloalkyleneoxides such as 1,2-epoxycyclopenatane, 1,2-epoxycyclohexane and 1,2-epoxycyclododecane.

Specific examples of the glycidyl ethers having 1 to 10 carbon atoms include alkyl glycidyl ethers such as methyl glycidyl ether, ethyl glycidyl ether and butyl glycidyl ether; and aryl glycidyl ethers such as phenyl glycidyl ether.

Specific examples of the oxides of vinyl aromatic compounds include styrene oxide.

Specific examples of the crosslinkable oxirane monomers include those oxirane monomers obtained by introducing a crosslinking group into oxirane monomers such as the above alkyleneoxides having 3 to 20 carbon atoms and glycidyl ethers having 1 to 10 carbon atoms. Examples of the crosslinking group include vinyl, acryloyl, epoxy, amino, carboxyl, an acid anhydride group, hydroxyl and a halogen atom.

These oxirane monomers (b) copolymerizable with ethyleneoxide may be used singly or in the combination of any two or more thereof. In the present invention, there is preferably used the combination of the oxirane monomer such as the above alkyleneoxides having 3 to 20 carbon atoms and/or glycidyl ethers having 1 to 10 carbon atoms with the crosslinkable oxirane monomer.

In this case, of these the above alkyleneoxides having 3 to 20 carbon atoms and glycidyl ethers having 1 to 10 carbon atoms, more preferred are chain-like alkyleneoxides, and most preferred are propyleneoxide and 1,2-epoxybutane which have a high polymerization reactivity.

Also, of the crosslinkable oxirane monomers, more preferred are photo-crosslinkable oxirane monomers having a photo-crosslinkable group such as vinyl, hydroxyl and an acid anhydride group, and most preferred are vinyl-containing oxirane monomers. Specific examples of the photo-crosslinkable oxirane monomers include ethylenically unsaturated glycidyl ethers such as vinyl glycidyl ether, allyl glycidyl ether, butenyl glycidyl ether and o-allylphenyl glycidyl ether; monoepoxides of dienes or polyenes such as butadiene monoepoxide, chloroprene monoepoxide, 4,5-epoxy-2-pentene, 3,4-epoxy-1-vinyl cyclohexene and 1,2-epoxy-5,9-cyclododecadiene; alkenyl epoxides such as 3,4-epoxy-1-butene, 1,2-epoxy-5-hexene and 1,2-epoxy-9-decene; and glycidyl esters of ethylenically unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl esters of 3-cyclohexenecarboxylic acid and glycidyl esters of 4-methyl-3-cyclohexenecarboxylic acid. Of these crosslinkable oxirane monomers, preferred are ethylenically unsaturated glycidyl ethers, and more preferred are allyl glycidyl ethers.

When copolymers of the crosslinkable oxirane monomers, especially the photo-crosslinkable oxirane monomers are used as the polyether polymer of the present invention, the resultant composition can be readily crosslinked by irradiation of ultraviolet light, resulting in facilitated production of a cathode film for batteries which is excellent in mechanical strength. The amount of the crosslinkable oxirane monomers used is usually in the range of 0.5 to 9 mol%, preferably 1 to 7 mol% and more preferably 2 to 5 mol% on the basis of the whole oxirane monomers used in the polymerization for production of the polyether polymer.

The ring-opening polymerization catalyst used for production of the polyether polymer in the present invention is not particularly limited. Examples of the ring-opening polymerization catalyst include conventionally known polymerization catalysts used as ring-opening polymerization catalysts for oxirane monomers, such as catalysts produced by reacting an organoaluminum compound with water and acetyl acetone (Japanese Patent Publication No. Showa 35(1960)-15797), catalysts produced by reacting triisobutyl aluminum with phosphoric acid and triethylamine (Japanese Patent Publication No. Showa 46(1971)-27534), catalysts produced by reacting triisobutyl aluminum with an organic acid salt of diazabicycloundecene and phosphoric acid (Japanese Patent Publication No. Showa 56(1981)-51171), catalysts composed of a partial hydrolyzed product of aluminum alkoxide and an organozinc compound (Japanese Patent Publication No. Showa 43(1968)-2945), catalysts composed of an organozinc compound and a polyhydric alcohol (Japanese Patent Publication No. Showa 45(1970)-7751), and catalysts composed of dialkyl zinc and water (Japanese Patent Publication No. Showa 36(1961)-3394).

Of these ring-opening polymerization catalysts, preferred are the catalysts produced by reacting triisobutyl aluminum with an organic acid salt of diazabicycloundecene and phosphoric acid because the use of such catalysts prevents production of toluene-insoluble components which tend to cause deterioration in strength of the resultant film.

The solvents used in the polymerization are not particularly limited unless they cause deactivation of the polymerization catalysts. Examples of the solvents include aromatic hydrocarbons such as benzene and toluene; chain-like saturated hydrocarbons such as n-pentane and n-hexane; and alicyclic hydrocarbons such as cyclopentane and cyclohexane.

As the polymerization method, there may be used a solution polymerization method or a solvent slurry polymerization method. Of these polymerization methods, preferred is a solvent slurry polymerization method using a solvent such as n-pentane, n-hexane and cyclopentane.

In the solvent slurry polymerization, the catalysts used therein are preferably previously treated with monomers forming solvent-insoluble polymers as well as monomers forming solvent-soluble polymers which are contained in the monomers used in the polymerization, from the standpoint of stabilization of the polymerization system. The treatment of the catalysts with these monomers may be conducted by mixing the catalyst components with a small amount of the respective monomers and aging the mixture at a temperature of 0 to 100°C and preferably 30 to 50°C for 3 to 30 min. The use of the thus aged catalysts can prevent the resultant polymers from adhering to a polymerization reactor.

The polymerization reaction may be performed at a temperature of 0 to 100°C and preferably 30 to 70°C by an optional method such as a batch method, a semi-batch method and a continuous method.

The polyether polymer used in the present invention preferably has a weight-average molecular weight (Mw) of 100000 to 1500000, more preferably 150000 to 1000000 and still more preferably 200000 to 600000. If the weight-average molecular weight of the polyether polymer is too small, the cathode film for batteries which is produced by subjecting the composition containing such a polyether polymer to molding and then a crosslinking reaction, tends to be deteriorated in flexibility and mechanical strength. On the other hand, if the weight-average molecular weight of the polyether polymer is too large, the active material of positive electrode or conductive fine particles contained in the solid electrolyte composition of the present invention containing the polyether polymer tend to be deteriorated in dispersibility, resulting in poor ion conductivity of the resultant solid electrolyte composition.

Further, the polyether polymer used in the present invention has such a molecular weight distribution that a ratio of Mw to Mn thereof wherein Mn is a number-average molecular weight thereof, is preferably in the range of 1.5 to 13, more preferably 1.6 to 12 and still more preferably 1.7 to 11.

The content of the photopolymerization initiator in the solid electrolyte composition of the present invention is essentially required to fall within the range of 2 to 30 parts by weight on the basis of 100 parts by weight of the polyether polymer. The content of the photopolymerization initiator in the solid electrolyte composition is preferably in the range of 2.5 to 20 parts by weight and more preferably 3 to 15 parts by weight. If the content of the photopolymerization initiator in the solid electrolyte composition is too small, the cathode film for batteries which is produced by subjecting the composition to molding and then a crosslinking reaction, tends to be deteriorated in flexibility and mechanical strength. On the other hand, if the content of the photopolymerization initiator in the solid electrolyte composition is too large, the resultant cathode film for batteries tends to be deteriorated in electric properties.

The photopolymerization initiator used in the present invention may be any polymerization initiators capable of generating radicals upon irradiation of ultraviolet light, and there are preferably used those polymerization initiators capable of generating radicals reactive with the crosslinkable group of the crosslinkable oxirane monomers (c). Specific examples of such photopolymerization initiators include benzyldimethyl ketal-based compounds such as 2,2-dimethoxy-1,2-diphenylethan-1-one; α-hydroxyketone-based compounds such as 1-hydroxy-cyclohexyl-phenyl-ketone, 2-hydroxy-2-methyl-1-phenyl-propan-1-one and 1-[4-(2-hydroxyethoxy)-phenyl]-2-hydroxy-2-methyl-1-propan-1-one; α-aminoketone-based compounds such as 2-methyl-1-[4-(methylthio)phenyl]-2-morpholinopropan-1-one and 2-benzyl-2-dimethylamino-1-(4-morpholinophenyl)-butanon-1; bisacylphosphine oxide-based compounds such as bis(2,4,6-trimethylbenzoyl)-phenylphosphine oxide; metallocene-based compounds such as bis(η⁵-2,4-cyclopentadien-1-yl)-bis(2,6-difluoro-3-(1H-pyrrol-1-yl)-phenyl)titani um; and thioxanthone-based compounds such as 2,4-diethyl thioxanthone, isopropyl thioxanthone, 1-chloro-4-propoxy thioxanthone and 2-(3-dimethylamino-2-hydroxypropoxy) 3,4-dimethyl-9H-thioxanthon-9-one-mesochloride.

These photopolymerization initiators may be used singly or in the combination of any two or more thereof. Of these photopolymerization initiators, from the standpoint of good ultraviolet light absorption efficiency, preferred are aromatic ketone-based compounds such as benzyldimethyl ketal-based compounds and phenyl-containing α-hydroxyketone-based compounds, as well as thioxanthone-based compounds, and more preferred are the benzyldimethyl ketal-based compounds.

The active material of positive electrode used in the present invention may be those ordinarily used in cathodes for batteries. Examples of the active material of positive electrode include lithium cobaltate, lithium-manganese composite oxides lithium nickelate, vanadium oxides such as V₂O₅ and V₆O₁₃, and lithium-vanadium composite oxides. The active material of positive electrode is usually used in the form of fine particles, and preferably has an average particle size of 0.5 to 30 µm and more preferably 0.6 to 20 µm though not particularly limited thereto. If the particle size of the active material of positive electrode is too large, the obtained molded article tends to be deteriorated in surface smoothness. On the other hand, if the particle size of the active material of positive electrode is too small, the active material of positive electrode tends to be difficult to disperse. The amount of the active material of positive electrode blended in the composition is preferably in the range of 0.1 to 50 times by weight, more preferably 0.3 to 20 times by weight and still more preferably 0.5 to 10 times by weight on the basis of the weight of the polyether polymer. If the content of the active material of positive electrode is too small, the resultant cathode tends to be insufficient in electrode performance. On the other hand, if the content of the active material of positive electrode is too large, the active material of positive electrode tends to be deteriorated in dispersibility, resulting in poor processability of the resultant composition.

As the conductive fine particles, there may be used acetylene black, Ketchen Black, graphite or the like. Of these conductive fine particles, preferred is Ketchen Black. The amount of the conductive fine particles blended in the composition is preferably in the range of 1 to 20 parts by weight and more preferably 2 to 15 parts by weight on the basis of 100 parts by weight of the active material of positive electrode. If the content of the conductive fine particles is too small, the resultant cathode tends to be deteriorated in conductivity. On the other hand, if the content of the conductive fine particles is too large, the conductive fine particles tend to be difficult to disperse.

The electrolyte salt compound used in the present invention may be compounds capable of transferring cations which are soluble in the polyether polymer used in the present invention. Specific examples of the electrolyte salt compound include salts composed of an anion selected from the group consisting of fluorine ion, chlorine ion, bromine ion, iodine ion, perchloric ion, thiocyanic ion, trifluoromethanesulfonic ion, heptafluoropropylsulfonic ion, bis(trifluoromethanesulfonyl)imido ion, bis(tetrafluoroethanesulfonyl)imido ion, bis(heptafluoropropylsulfonyl)imido ion, trifluorosulfone ion, tetrafluoroboric ion, nitric ion, AsF₆⁻, PF₆⁻, stearylsulfonic ion, octylsulfonic ion, dodecylbenzenesulfonic ion, naphthalenesulfonic ion, dodecylnaphthalenesulfonic ion and 7,7,8,8-tetracyano-p-quinodimethane ion, and a cation of a metal selected from the group consisting of Li, Na, K, Rb, Cs, Mg, Ca and Ba. In particular, when applied to a cathode used in lithium polymer batteries, of these salts, more preferred are LiBF₄, LiPF₆, LiCF₃SO₃, LiC₄F₉SO₃, LiN(CF₃SO₂)₂ and LiN(C₂F₅SO₂)₂.

These electrolyte salt compounds may be used in the combination of any two or more thereof. The amount of the electrolyte salt compound used on the basis of the polyether polymer is controlled such that a ratio of the number of moles of alkali metal salts contained in the electrolyte salt compound to the total number of moles of ether oxygen atoms contained in the polyether polymer is usually in the range of 0.001 to 5, preferably 0.005 to 3 and more preferably 0.01 to 1. If the amount of the electrolyte salt compound used is too large, the cathode film for batteries which is produced by subjecting the composition of the present invention to molding and then a crosslinking reaction, tends to be deteriorated in mechanical strength as well as ion conductivity. On the other hand, If the amount of the electrolyte salt compound used is too small, the resultant cathode film for batteries tends to be deteriorated in ion conductivity, resulting in deteriorated performance of the resultant batteries.

The solid electrolyte composition of the present invention may further contain, if desired, various additives such as anti-aging agents, light stabilizers, lubricants, flame retardants, mildew-proofing agents, antistatic agents, colorants, reinforcing materials and fillers.

Although the anti-aging agents used in the present invention are not particularly limited, preferred are phenol-based anti-aging agents, and more preferred are hindered phenol-based anti-aging agents.

The cathode film for batteries according to the present invention may be produced by molding the solid electrolyte composition of the present invention into a film shape, and then subjecting the resultant film to a crosslinking reaction by irradiation of ultraviolet light.

The solid electrolyte composition may be molded into a film shape by either the method (1) of previously blending the above polyether polymer, active material, conductive fine particles, electrolyte salt compound and photopolymerization initiator with each other using rolls or a Banbury mixer by a known method, and then forming the obtained mixture into a film shape, or the method (2) of molding the composition into a film shape while mixing a part or whole of the above respective components, for example, in an extruder.

The order of blending of the above respective components upon mixing the composition is not particularly limited. Preferably, the components which hardly undergo thermal decomposition are first fully mixed with each other, and then the remaining components which are readily susceptible to thermal reaction or thermal decomposition such as, for example, crosslinking agents and crosslinking accelerators are mixed with each other for a short period of time.

As the molding or shaping method, there may be used an extrusion-molding method, a press-molding method, an injection-molding method and a solution cast method. In the present invention, of these methods, preferred is an extrusion-molding method from the standpoints of high surface accuracy and good productivity of the cathode film for batteries, etc. In addition, when the film is produced by the extrusion-molding method, most preferred is a die-extrusion-molding method using a twin-screw extruder.

The crosslinking of the obtained film is conducted by irradiation of ultraviolet light. As a light source for irradiating the ultraviolet light, there may be used a high-pressure mercury lamp, a metal halide lamp, a mercury-xenon lamp, etc.

The dose of ultraviolet light irradiated may vary depending upon kinds and amounts of photopolymerization initiators used. In the case of a high-pressure mercury lamp having an output power of 80 W/cm, the cumulative dose of ultraviolet light irradiated therefrom is usually in the range of 10000 to 100000 mJ/cm², preferably 15000 to 90000 mJ/cm² and more preferably 20000 to 80000 mJ/cm². If the dose of ultraviolet light is too small, the crosslinking reaction may fail to proceed sufficiently, resulting in deteriorated mechanical strength of the resultant cathode film for batteries. On the other hand, if the dose of ultraviolet light is too large, the resultant cathode film for batteries tends to be deteriorated in electric properties such as charging and discharging characteristics.

In the present invention, the crosslinking reaction may be conducted by the irradiation of ultraviolet light in combination with heating. In this case, a crosslinking agent such as organic peroxides, azo compounds, sulfur, mercapto triazines and thioureas may be added to the solid electrolyte composition of the present invention.

The amount of the crosslinking agent added is usually in the range of 0.01 to 15 parts by weight, preferably 0.05 to 12 parts by weight and more preferably 0.1 to 10 parts by weight on the basis of 100 parts by weight of the polyether polymer. However, if the amount of the crosslinking agent added is too large, the solid electrolyte composition tends to suffer from early crosslinking (scorch) upon molding, resulting in difficult molding procedure thereof.

The cathode film for batteries according to the present invention has a thickness of usually 10 to 200 µm, preferably 15 to 150 µm and more preferably 30 to 120 µm. If the thickness of the cathode film is excessively small, the cathode film may fail to be stably produced. On the other hand, if the thickness of the cathode film is excessively large, the resultant cathode film tends to be deteriorated ion conductivity, thereby failing to increase an output power of the obtained batteries.

The kinds of batteries to which the cathode film of the present invention are suitably applicable are not particularly limited. Examples of the batteries include alkali metal-based batteries using an alkali metal such as lithium, potassium and sodium, halogen salt-based batteries using a halogen salt such as zinc-silver chloride, magnesium-silver halide and magnesium-copper halide, and proton-conductive type batteries such as nickel-hydrogen batteries. Of these batteries, preferred are lithium batteries having a high voltage, a high energy and a high ion conductivity in a solid electrolyte. Also, as the battery configuration, most preferred are those batteries containing no electrolyte solution whose electrolyte is composed of a polymer solid electrolyte only.

### EXAMPLES

The present invention is described in more detail by referring to the following examples and comparative examples. However, it should be noted that these examples are only illustrative and not intended to limit the invention thereto. All of components used in these examples and comparative examples such as solvents, monomers, etc., were subjected to deaeration and dehydration treatments. All procedures in examples and comparative examples were conducted in an inert gas atmosphere under an anhydrous condition. Meanwhile, "part(s)" and "%" used in the examples and comparative examples represent "part(s) by weight" and "% by weight", respectively, unless otherwise specified.
(1) Composition of Polymer
   The composition of the polyether polymer was measured by ¹H-NMR (at 500 MHz) and ¹³C-NMR.
(2) Weight-Average Molecular Weight (Mw) and Molecular Weight Distribution (Mw/Mn)
   Mw and Mw/Mn were measured using a gel permeation chromatography (GPC) under the following conditions.
   Apparatus: GPC System available from Toso Co., Ltd.
   Column: G7000HHR + GMHHR-H available from Toso Co., Ltd.
   Solvent: DMF (lithium bromide 5mmol/L)
   Flow Rate: 1 mL/min; Column Temperature: 40°C
   Standard Substance for Determination of Molecular Weight: Standard polystyrene available from Polymer Laboratory Co., Ltd.
(3) Film Strength
   A dumbbell specimen #3 was prepared from a 85 µm-thick film obtained in the below-mentioned examples and comparative examples, and subjected to a tensile test to measure a tensile strength thereof according to JIS K6251.
(4) Cycle Performance of Battery
   Bistrifluoromethylsulfonylimide lithium was added to 3000 parts of a polyether polymer in such an amount that a molar ratio of a lithium atom contained in the electrolyte salt to an oxygen atom contained in the polyether polymer was 0.05, and then the resultant mixture was intimately mixed with 3 parts of benzyldimethyl ketal as a photopolymerization initiator to obtain a polymeric solid electrolyte composition. The resultant composition was fed into a twin-screw extruder, and extruded therefrom into a film shape at a screw temperature of 80°C, a rotating speed of 150 rpm and a die temperature of 155°C. The thus extruded film was continuously attached onto a polypropylene (PP) film, and irradiated with an ultraviolet light to subject the film to a crosslinking reaction. The obtained polymeric solid electrolyte thin coating film was peeled off from the PP film to obtain a polymeric solid electrolyte film having an average thickness of 50 µm. The resultant polymeric solid electrolyte film was interposed between a cathode film obtained in the respective examples and comparative examples and a metallic lithium foil and bonded thereto to assemble a coin-shaped battery (CR2032). The obtained battery was subjected to a constant-current charge/discharge cycle test in which the battery was repeatedly charged at a temperature of 60°C and a current density of 0.2 mA/cm² until reaching 4.2 V and discharged at a current density of 0.2 mA/cm² until reaching 2.7 V to thereby determine a ratio (percent) of the discharge capacity at the 30th cycle to the discharge capacity at the 3rd cycle as 100%. The larger percent value indicates a less reduction in discharge capacity and, therefore, a good result.

### EXAMPLE 1

Ethyleneoxide, propyleneoxide and allyl glycidyl ether were subjected to seed polymerization in n-hexane by a known method, thereby obtaining a polyether polymer containing 93.5 mol% of ethyleneoxide (EO) units, 2.8 mol% of propyleneoxide (PO) units and 3.7 mol% of allyl glycidyl ether (AGE) units and having a weight-average molecular weight of 350000 and a molecular weight distribution of 10.2.

One hundred parts of the thus obtained polyether polymer was mixed with 21.6 parts of bistrifluoromethylsulfonylimide lithium and 6 parts of 2,2-dimethoxy-1,2-diphenylethan-1-one as a photopolymerization initiator to prepare a composition. The resultant composition was fed into a twin-screw extruder and extruded therefrom at a screw temperature of 80°C, a rotating speed of 150 rpm and a die temperature of 155°C while feeding 336 parts of lithium cobaltate and 14 parts of Ketchen Black into the extruder at a mid of a barrel thereof to form a film having an average thickness of 85 µm. The thus extruded film was irradiated with an ultraviolet light using a high-pressure mercury lamp at a cumulative dose of 45000 mJ/cm² to thereby subject the film to a crosslinking reaction.

The mechanical strength of the obtained film as well as the cycle performance of a battery produced using the film were evaluated by the above methods. The results are shown in Table 1.

### EXAMPLE 2

The same procedure as in EXAMPLE 1 was repeated except that the cumulative dose of an ultraviolet light irradiated was changed to 20000 mJ/cm2, thereby extruding the composition into a film and subjecting the film to a crosslinking reaction and then evaluation thereof. The results are shown in Table 1.

### COMPARATIVE EXAMPLE 1

The same procedure as in EXAMPLE 2 was repeated except that the amount of 2,2-dimethoxy-1,2-diphenylethan-1-one was changed from 6 parts to 1 part, thereby extruding the composition into a film and subjecting the film to a crosslinking reaction and then evaluation thereof. The results are shown in Table 1.

### COMPARATIVE EXAMPLE 2

The same procedure as in EXAMPLE 2 was repeated except that the amount of 2,2-dimethoxy-1,2-diphenylethan-1-one was changed from 6 parts to 40 parts, thereby extruding the composition into a film and subjecting the film to a crosslinking reaction and then evaluation thereof. The results are shown in Table 1.

**TABLE 1**

| | Example 1 | Example 2 | Comparative Example 1 | Comparative Example 2 |
|---|---|---|---|---|
| Amount of photo-polymeri zation initiator (part) | 6 | 6 | 1 | 40 |
| Dose of ultraviolet light irradiated (mJ/cm²) | 45000 | 20000 | 20000 | 20000 |
| Tensile strength (MPa) | 0.51 | 0.26 | ≤0.04 | ≤0.04 |
| Battery cycle performance (%) | 95 | 93 | 94 | 55 |

From the above Table 1, it was confirmed that the cathode film obtained by crosslinking the solid electrolyte composition containing a too small amount of the photopolymerization initiator was deteriorated in tensile strength (Comparative Example 1), and on the contrary, the cathode film obtained by crosslinking the solid electrolyte composition containing a too large amount of the photopolymerization initiator was deteriorated in tensile strength and battery cycle performance (Comparative Example 2). On the other hand, it was confirmed that the cathode film obtained by crosslinking the solid electrolyte composition of the present invention was excellent in both tensile strength and battery cycle performance (Examples 1 and 2).

### INDUSTRIAL APPLICABILITY

When the solid electrolyte composition for cathode according to the present invention is molded into a film and the resultant film is subjected to crosslinking reaction by irradiation of an ultraviolet light, it is possible to produce a cathode film for batteries which is excellent in mechanical strength and ion conductivity and is facilitated in handling in a film state. Further, a battery produced using the cathode film can exhibit an excellent cycle performance.

## Claims

1. A solid electrolyte composition for cathode comprising a polyether polymer, an active material of positive electrode, conductive fine particles, an electrolyte salt compound and a photopolymerization initiator, said photopolymerization initiator being contained in an amount of 2 to 30 parts by weight on the basis of 100 parts by weight of the polyether polymer.

2. The solid electrolyte composition for cathode according to claim 1, wherein said photopolymerization initiator is contained in an amount of 3 to 15 parts by weight on the basis of 100 parts by weight of the polyether polymer.

3. The solid electrolyte composition for cathode according to claim 1, wherein said polyether polymer is a copolymer of a photo-crosslinkable oxirane monomer.

4. The solid electrolyte composition for cathode according to claim 1, wherein said polyether polymer has a weight-average molecular weight of 100000 to 1500000.

5. A cathode film for batteries produced by subjecting the solid electrolyte composition as claimed in claim 1 to molding and then a crosslinking reaction by irradiation of an ultraviolet light.

6. A process for producing a cathode film for batteries, comprising the steps of:
blending a polyether polymer containing an electrolyte salt compound, an active material of positive electrode, conductive fine particles and a photopolymerization initiator with each other, said photopolymerization initiator being present in an amount of 2 to 30 parts by weight on the basis of 100 parts by weight of the polyether polymer;
molding the resultant blended mixture into a film; and
subjecting the film to a crosslinking reaction by irradiating an ultraviolet light.

7. The process according to claim 6, wherein a cumulative dose of the ultraviolet light irradiated is in the range of 10000 to 100000 mJ/cm².
